# EUROPEAN PATENT APPLICATION

(11) **EP 4 841 739 A1**
(43) Date of publication of application: **18.11.2026**
(21) Application number: 25738985.8
(22) Date of filing: 09.01.2025
(51) Int. Cl.: H01M 10/0567, H01M 10/052

(54) **ELECTROLYTE ADDITIVE FOR LITHIUM SECONDARY BATTERY, AND ELECTROLYTE FOR LITHIUM SECONDARY BATTERY AND LITHIUM SECONDARY BATTERY EACH COMPRISING SAME**

(30) Priority: 10.01.2024 KR 20240003974
(71) Applicant: Enchem Co., Ltd, Jecheon-si, Chungcheongbuk-do 27159 (KR)
(72) Inventor: YANG, Hoseok, Cheonan-si Chungcheongnam-do 31214 (KR); OH, Jungkang, Cheonan-si Chungcheongnam-do 31214 (KR); LEE, Joungjun, Cheonan-si Chungcheongnam-do 31214 (KR); JEONG, Jiseon, Cheonan-si Chungcheongnam-do 31214 (KR); CHOI, Jaeyong, Cheonan-si Chungcheongnam-do 31214 (KR); JO, Minsang, Cheonan-si Chungcheongnam-do 31214 (KR); LEE, Yeonggyu, Cheonan-si Chungcheongnam-do 31214 (KR); MYUNG, Subeen, Cheonan-si Chungcheongnam-do 31214 (KR); KIM, Jaeyoung, Cheonan-si Chungcheongnam-do 31214 (KR); SHIN, Huntak, Cheonan-si Chungcheongnam-do 31214 (KR); LIM, Hyunmin, Cheonan-si Chungcheongnam-do 31214 (KR)
(74) Representative: Vossius & Partner Patentanwälte Rechtsanwälte mbB
(86) International application number: PCT/KR2025/000486
(87) International publication number: WO 2025/150912

(57) **Abstract**

The purpose of the present invention is to provide an electrolyte additive, for a lithium secondary battery, represented by chemical formula 1, and an electrolyte for a lithium secondary battery and a lithium secondary battery each comprising same.

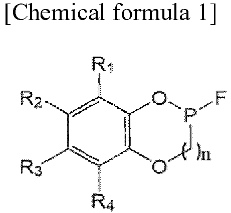

In chemical formula 1, R₁ to R₄ each independently represent hydrogen, deuterium, a C₁-C₆ alkyl group, or a C₃-C₆ cycloalkyl group, and n represents an integer of 0 to 2.

The electrolyte additive for a lithium secondary battery according to the present invention can enhance the high-temperature lifespan of the lithium secondary battery and improve the capacity recovery rate, thickness increase rate, and resistance increase rate during high-temperature storage.

## Description

### TECHNICAL FIELD

The present invention is intended to provide an electrolyte additive for a lithium secondary battery, represented by the following Chemical Formula 1, and an electrolyte for a lithium secondary battery and a lithium secondary battery each comprising the same. 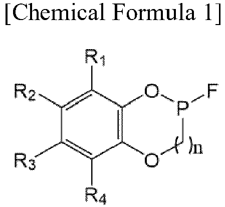 (In Chemical Formula 1 above, R₁ to R₄ each independently represent hydrogen, deuterium, a C₁-C₆ alkyl group, or a C₃-C₆ cycloalkyl group, and n represents an integer of 0 to 2.)

The electrolyte additive for a lithium secondary battery according to the present invention can enhance a high-temperature lifespan of the lithium secondary battery and improve a capacity recovery rate and reduce a thickness increase rate and a resistance increase rate during high-temperature storage.

### BACKGROUND ART

Batteries are used as a driving power source for portable electronic devices such as video cameras, mobile phones, and notebook computers. Compared with conventional lead-acid batteries, nickel-cadmium batteries, nickel-metal hydride (Ni-MH) batteries, nickel-zinc batteries, and the like, a rechargeable lithium secondary battery has an energy density per unit weight that is at least three times higher and is capable of rapid charging.

The demand for such lithium secondary batteries is rapidly increasing, and accordingly, much research has been conducted on lithium secondary batteries having a high energy density and a high discharge voltage, and such batteries have been commercialized and widely used.

Compared with other batteries, a lithium secondary battery has advantages such as being light in weight, small in volume, high in operating voltage, high in energy density, large in output power, high in charging efficiency, free of a memory effect, and long in lifespan. Accordingly, it is widely applied in the field of digital products such as mobile phones and notebook computers, and is regarded as one of the best choices particularly for electric vehicles and large-sized energy storage devices.

Recently, as the development of mid- to large-sized lithium secondary batteries, such as those for electric vehicles, has progressed, various studies have been conducted to implement lithium secondary batteries having a high voltage and a high capacity. In particular, there is a need for a suitable additive capable of implementing excellent characteristics also in high-temperature lifespan improvement and high-temperature storage.

Meanwhile, there are the following prior art documents relating to an electrolyte additive for a lithium secondary battery.
(Prior Art Document 1) Korean Patent No. 10-2179846
(Prior Art Document 2) Korean Patent No. 10-2440653
(Prior Art Document 3) Korean Patent No. 10-2440657
(Prior Art Document 4) Korean Patent No. 10-2440658

### SUMMARY OF INVENTION

### Technical Problem

As a result of intensive efforts to improve the high-temperature lifespan improvement characteristics of a lithium secondary battery and to improve a capacity recovery rate and reduce a thickness increase rate and a resistance increase rate during high-temperature storage, the present inventors confirmed that a capacity retention rate of 80% or more after 300 cycles at 45°C, a capacity recovery rate of 90% or more after 4 weeks at 60°C, a thickness increase rate of 5% or less, and/or a resistance increase rate of 30% or less can be exhibited by using the electrolyte additive of the present invention (see Examples 1 to 6), and thereby completed the present invention.

Accordingly, an object of the present invention is to provide an electrolyte additive for a lithium secondary battery, represented by the following Chemical Formula 1, and more preferably, an electrolyte additive represented by the following Chemical Formula 2. 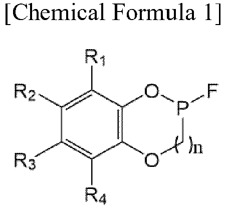 (In Chemical Formula 1 above, R₁ to R₄ each independently represent hydrogen, deuterium, a C₁-C₆ alkyl group, or a C₃-C₆ cycloalkyl group, and n represents an integer of 0 to 2.)

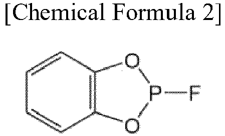

In addition, another object of the present invention is to provide an electrolyte for a lithium secondary battery, comprising the electrolyte additive for a lithium secondary battery represented by the above Chemical Formula 1, and more preferably, the electrolyte additive represented by the above Chemical Formula 2.

In addition, another object of the present invention is to provide a lithium secondary battery, comprising the electrolyte additive for a lithium secondary battery represented by the above Chemical Formula 1, and more preferably, the electrolyte additive represented by the above Chemical Formula 2.

The objects of the present invention are not limited to the objects mentioned above, and other objects and advantages of the present invention that are not mentioned can be understood by the following description, and will be more clearly understood by the embodiments of the present invention.

In addition, it will be readily understood that the objects and advantages of the present invention can be realized by the means shown in the claims and combinations thereof.

### Technical Solution

The present invention discloses an electrolyte additive for a lithium secondary battery, an electrolyte for a lithium secondary battery, and a lithium secondary battery.

According to a first embodiment, an electrolyte additive for a lithium secondary battery, represented by the following Chemical Formula 1, is disclosed. 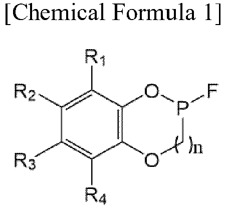 (In Chemical Formula 1 above, R₁ to R₄ each independently represent hydrogen, deuterium, a C₁-C₆ alkyl group, or a C₃-C₆ cycloalkyl group, and n represents an integer of 0 to 2.)

In the present invention, the electrolyte additive for a lithium secondary battery may be represented by the following Chemical Formula 2.

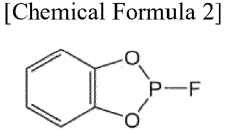

According to a second embodiment, an electrolyte for a lithium secondary battery, comprising an organic solvent, a lithium salt, and the additive according to the above Chemical Formula 1 or Chemical Formula 2, is disclosed.

In the present invention, the additive may be included in an amount of 0.005 to 10 wt% based on the weight of the electrolyte.

In the present invention, the organic solvent may comprise ethylene carbonate (EC), ethyl methyl carbonate (EMC), dimethyl carbonate (DMC), diethyl carbonate (DEC), or a combination thereof.

In the present invention, the lithium salt may comprise LiPF₆, LiFSI, LiDFOB, LiBF₄, LiAsF₆, LiCF₃SO₃, LiC(CF₃SO₂)₃, LiN(SO₂C₂F₅)₂, LiN(SO₂C₂F₃)₂, LiN(SO₂F₃)₂, LiSbF₆, LiPF₃(CF₂CF₃)₃, LiPF₃(CF₃)₃, or a combination thereof.

In the present invention, the additive may further comprise 0.5 to 3 wt% of vinylene carbonate (VC) based on the weight of the electrolyte.

In the present invention, the additive may further comprise 0.5 to 3 wt% of vinylene carbonate (VC), 0.5 to 3 wt% of propanesultone (PS), and 0.1 to 1.5 wt% of ethylene sulfate (ESA), based on the weight of the electrolyte. In addition, the additive may further comprise 100 to 10,000 ppm of triphenyl phosphite (TPPI) based on the weight of the electrolyte.

According to a third embodiment, a lithium secondary battery, comprising an electrolyte comprising the additive according to the above Chemical Formula 1 or Chemical Formula 2; a positive electrode; and a negative electrode, is disclosed.

### Advantageous Effects

The electrolyte additive for a lithium secondary battery according to the present invention can enhance a high-temperature lifespan of the lithium secondary battery and improve a capacity recovery rate and reduce a thickness increase rate and a resistance increase rate during high-temperature storage.

### DETAILED DESCRIPTION

Unless defined otherwise, all technical and scientific terms used herein have the same meaning as commonly understood by a person skilled in the art to which the present invention pertains. In general, the nomenclature used herein is well known and commonly used in the art.

In addition, throughout this specification, when a part is said to "comprise" a certain component, this does not exclude other components but means that other components may further be included, unless specifically stated to the contrary.

### 1. Electrolyte Additive for Lithium Secondary Battery

The present invention provides an electrolyte additive for a lithium secondary battery, represented by the following Chemical Formula 1. 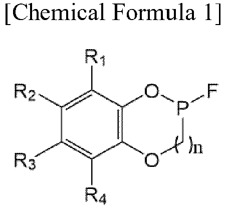 (In Chemical Formula 1 above, R₁ to R₄ each independently represent hydrogen, deuterium, a C₁-C₆ alkyl group, or a C₃-C₆ cycloalkyl group, and n represents an integer of 0 to 2.)

In the electrolyte additive for a lithium secondary battery according to the present invention, the additive may be represented by the following Chemical Formula 2.

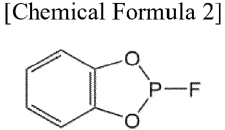

### 2. Electrolyte for Lithium Secondary Battery

The present invention provides an electrolyte for a lithium secondary battery, comprising an organic solvent, a lithium salt, and the electrolyte additive for a lithium secondary battery represented by the following Chemical Formula 1. 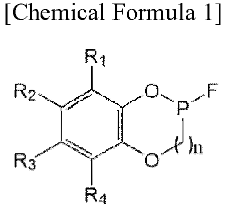 (In Chemical Formula 1 above, R₁ to R₄ each independently represent hydrogen, deuterium, a C₁-C₆ alkyl group, or a C₃-C₆ cycloalkyl group, and n represents an integer of 0 to 2.)

As a non-limiting example of the present invention, more preferably, the organic solvent may comprise a carbonate-based solvent, an ester-based solvent, an ether-based solvent, a ketone-based solvent, an alcohol-based solvent, an aprotic solvent, or a combination thereof.

For example, the carbonate-based solvent may comprise dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), fluoroethylene carbonate (FEC), or butylene carbonate. The ester-based solvent may comprise methyl acetate (MA), ethyl acetate (EA), n-propyl acetate (n-PA), 1,1-dimethylethyl acetate (DMEA), methyl propionate (MP), ethyl propionate (EP), gamma-butyrolactone (γGBL), decanolide, valerolactone, mevalonolactone, or caprolactone.

For example, the ether-based organic solvent may comprise dibutyl ether, tetraethylene glycol dimethyl ether (TEGDME), diethylene glycol dimethyl ether (DEGDME), dimethoxy ethane, 2-methyltetrahydrofuran, or tetrahydrofuran. The ketone-based solvent may comprise cyclohexanone.

For example, the alcohol-based solvent may comprise ethyl alcohol or isopropyl alcohol.

For example, the aprotic solvent may comprise a nitrile-based solvent, an amide-based solvent, a dioxolane-based solvent such as 1,3-dioxolane, or a sulfolane-based solvent.

As a non-limiting example of the present invention, more preferably, the lithium salt may comprise LiPF₆, LiFSI, LiDFOB, LiBF₄, LiAsF₆, LiCF₃SO₃, LiC(CF₃SO₂)₃, LiN(SO₂C₂F₅)₂, LiN(SO₂C₂F₃)₂, LiN(SO₂F₃)₂, LiSbF₆, LiPF₃(CF₂CF₃)₃, LiPF₃(CF₃)₃, or a combination thereof.

As a non-limiting example of the present invention, more preferably, the lithium salt may be included at a concentration of 0.01 to 5 M, preferably 0.1 to 2 M, with respect to the solvent. Within the above range, transfer of lithium ions and/or electrons is promoted during charging and discharging of the lithium secondary battery, so that an improved capacity can be secured.

In the electrolyte for a lithium secondary battery according to the present invention, the additive may be represented by the following Chemical Formula 2.

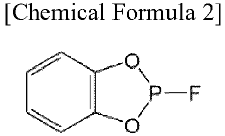

In the electrolyte for a lithium secondary battery according to the present invention, the additive may be included in an amount of 0.005 wt% or more, 0.01 wt% or more, 0.05 wt% or more, 0.1 wt% or more, 0.2 wt% or more, 0.3 wt% or more, 0.5 wt% or more, 0.8 wt% or more, 1.0 wt% or more, 10 wt% or less, 5 wt% or less, 3 wt% or less, or 2 wt% or less, based on the weight of the electrolyte. Within the above range, an improved capacity retention rate after 300 cycles at 45°C, an improved capacity recovery rate, and reduced thickness increase rate and resistance increase rate after 4 weeks at 60°C can be exhibited.

In the electrolyte for a lithium secondary battery according to the present invention, the additive may further comprise, as an additional additive, vinylene carbonate (VC), propanesultone (PS), ethylene sulfate (ESA), triphenyl phosphite (TPPI), or a combination thereof. In this case, a total content of the additional additive or a combination thereof included in addition to the additive represented by the above Chemical Formula 1 may be 0.5 wt% or more, 1.0 wt% or more, 5 wt% or less, 3 wt% or less, or 2 wt% or less, based on the weight of the electrolyte.

In one exemplary embodiment, the electrolyte for a lithium secondary battery according to the present invention may further comprise vinylene carbonate (VC), in addition to the additive represented by the above Chemical Formula 1. In this case, the vinylene carbonate (VC) may be included in an amount of 0.5 to 3 wt%, preferably 1.0 to 1.5 wt%, based on the weight of the electrolyte. In addition, in this case, a weight ratio of the additive represented by the above Chemical Formula 1 to the vinylene carbonate (VC) may be 0.1:1 to 10:1, preferably 0.5:1 to 5:1.

In one exemplary embodiment, the electrolyte for a lithium secondary battery according to the present invention may comprise, in addition to the additive represented by the above Chemical Formula 1, vinylene carbonate (VC), propanesultone (PS), and ethylene sulfate (ESA). In this case, the vinylene carbonate (VC) may be included in an amount of 0.5 to 3 wt%, preferably 1.0 to 1.5 wt%, based on the weight of the electrolyte; the propanesultone (PS) may be included in an amount of 0.5 to 3 wt%, preferably 1.0 to 1.5 wt%, based on the weight of the electrolyte; and the ethylene sulfate (ESA) may be included in an amount of 0.1 to 1.5 wt%, preferably 0.5 to 1.0 wt%, based on the weight of the electrolyte. In addition, in this case, a weight ratio of the additive represented by Chemical Formula 1 to the vinylene carbonate (VC) may be 0.1:1 to 10:1, preferably 0.5:1 to 5:1; a weight ratio of the additive represented by Chemical Formula 1 to the propanesultone (PS) may be 0.1:1 to 5:1, preferably 0.5:1 to 5:1; and a weight ratio of the additive represented by Chemical Formula 1 to the ethylene sulfate (ESA) may be 0.1:0.5 to 15:1, preferably 0.5:1 to 10:1.

In one exemplary embodiment, the electrolyte for a lithium secondary battery according to the present invention may comprise, in addition to the additive represented by the above Chemical Formula 1, vinylene carbonate (VC), propanesultone (PS), ethylene sulfate (ESA), and triphenyl phosphite (TPPI). In this case, the vinylene carbonate (VC) may be included in an amount of 0.5 to 3 wt%, preferably 1.0 to 1.5 wt%, based on the weight of the electrolyte; the propanesultone (PS) may be included in an amount of 0.5 to 3 wt%, preferably 1.0 to 1.5 wt%, based on the weight of the electrolyte; the ethylene sulfate (ESA) may be included in an amount of 0.1 to 1.5 wt%, preferably 0.5 to 1.0 wt%, based on the weight of the electrolyte; and the triphenyl phosphite (TPPI) may be included in an amount of 100 to 10,000 ppm, preferably 300 to 1,000 ppm, based on the weight of the electrolyte. In addition, in this case, a weight ratio of the additive represented by Chemical Formula 1 to the vinylene carbonate (VC) may be 0.1:1 to 10:1, preferably 0.5:1 to 5:1; a weight ratio of the additive represented by Chemical Formula 1 to the propanesultone (PS) may be 0.1:1 to 5:1, preferably 0.5:1 to 5:1; a weight ratio of the additive represented by Chemical Formula 1 to the ethylene sulfate (ESA) may be 0.1:0.5 to 15:1, preferably 0.5:1 to 10:1; and a weight ratio of the additive represented by Chemical Formula 1 to the triphenyl phosphite (TPPI) may be 1:0.01 to 1:0.5.

### 3. Lithium Secondary Battery

The present invention is intended to provide a lithium secondary battery comprising the above-described electrolyte for a lithium secondary battery; a positive electrode; and a negative electrode.

In the lithium secondary battery according to the present invention, the positive electrode may comprise a current collector and a positive electrode active material layer formed on the current collector. Aluminum may be used as the current collector, but the current collector is not limited thereto. The positive electrode active material layer may comprise a positive electrode active material, a binder, and optionally a conductive material. The binder may be selected from, for example, polyvinyl alcohol, carboxymethyl cellulose, hydroxypropyl cellulose, diacetyl cellulose, polyvinyl chloride, carboxylated polyvinyl chloride, polyvinyl fluoride, a polymer comprising ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, nylon, or a combination thereof. The conductive material is used to impart conductivity to the electrode, and any electronically conductive material may be used as long as it does not cause a chemical change in the battery. Examples of the conductive material may be selected from natural graphite, artificial graphite, carbon black, acetylene black, Ketjen black, carbon fiber, metal powders such as copper, nickel, aluminum, and silver, metal fibers, a polyphenylene derivative, or a combination thereof. In one exemplary embodiment, the positive electrode active material may be represented by the following Chemical Formula 1.

[Chemical Formula 3] LiNiₐCo_{b}Mn_{c}M_{d}O₂

0.1≤a≤0.98, 0.01≤b≤0.9, 0.01≤c≤0.9, 0.0≤d≤0.05, and a+b+c+d=1, and
M may be selected from Al, Mg, Fe, Cu, Zn, Cr, Ag, Ca, Na, K, In, Ga, Ge, V, Mo, Nb, Si, Ti, or a combination thereof. In the above Chemical Formula 1, a is preferably 0.5 to 0.98, most preferably 0.6 to 0.98; b is preferably 0.01 to 0.3, most preferably 0.05 to 0.1; c is preferably 0.01 to 0.3, most preferably 0.05 to 0.1; and d is preferably 0 to 0.1 or less.)

In the lithium secondary battery according to the present invention, the negative electrode may comprise a current collector and a negative electrode active material layer formed on the current collector. As the current collector, a copper foil, a nickel foil, a stainless steel foil, a titanium foil, a nickel foam, a copper foam, a polymer substrate coated with a conductive metal, or a combination thereof may be used. The negative electrode active material layer may comprise a negative electrode active material, a binder composition, and/or a conductive material. The negative electrode active material may comprise a material capable of reversibly intercalating/deintercalating lithium ions, lithium metal, an alloy of lithium metal, a material capable of doping and dedoping lithium, or a transition metal oxide.

In the lithium secondary battery according to the present invention, the lithium secondary battery may further comprise a separator that prevents a short circuit between the positive electrode and the negative electrode and provides a movement path for lithium ions. As the separator, a polyolefin-based polymer membrane such as polypropylene, polyethylene, polyethylene/polypropylene, polyethylene/polypropylene/polyethylene, or polypropylene/polyethylene/polypropylene, or a multilayer film thereof, a microporous film, a woven fabric, or a nonwoven fabric may be used. In addition, a film in which a resin having excellent stability is coated on a porous polyolefin film may also be used, but is not limited thereto.

In the lithium secondary battery according to the present invention, the shape of the lithium secondary battery may comprise a prismatic type, a cylindrical type, or a pouch type.

In the lithium secondary battery according to the present invention, the lithium secondary battery may exhibit a capacity retention rate of 80% or more after 300 cycles at 45°C, a capacity recovery rate of 90% or more after 4 weeks at 60°C, a thickness increase rate of 5% or less, and/or a resistance increase rate of 30% or less.

Hereinafter, the present invention will be described in detail through Examples; however, the following Examples and Experimental Examples are merely to illustrate one form of the present invention, and the scope of the present invention is not limited by the following Examples and Experimental Examples.

### Preparation of Electrolyte Additive of Chemical Formula 2 of the Present Invention

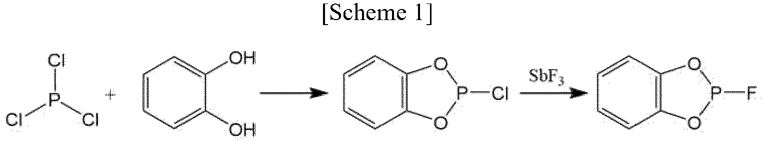

The electrolyte additive of Chemical Formula 2 according to the present invention was prepared according to the above Scheme 1.

1^{st} step: Catechol 16.04 g and isopropyl ether (IPE) 80.18 g (5 vol) were introduced into a 250 mL three-neck jacketed reactor, followed by cooling and stirring (-10°C or lower), and phosphorus trichloride was added dropwise while maintaining the internal temperature (no exotherm; added dropwise over about 10 minutes). Subsequently, the mixture was heated to room temperature and reacted for 48 hours (completion of the reaction was confirmed by GC analysis), and the reactant was membrane-filtered and transferred to a 250 mL 1-neck flask (removing unreacted materials and by-products). Solids were removed by filtration under a nitrogen atmosphere and dried, and the solvent and the reaction by-product HCl gas were removed under reduced pressure to obtain a pale yellow liquid (yield about 40%).

2^{nd} step: 1,3,2-benzodioxaphosphole, 2-chloro 50 g and isopropyl ether 100 g (5 vol.) were added to a 500 mL three-neck flask and mixed, and then antimony trifluoride 10.41 g (0.4 eq) was additionally added at room temperature. The mixture was reacted at room temperature for 2 hours, membrane-filtered, and transferred to a 250 mL flask. To the mixture, 5% NaHCO₃ 50 mL and DIW 50 mL were added and work-up was performed once each, and then the organic layer was separated. The organic layer was treated with MgSO₄ to remove a trace amount of moisture, and then the filtrate was concentrated under reduced pressure to remove the solvent, thereby obtaining a white solid with a yield of 90% (GC Purity 98.5%).

### Preparation of Electrolyte

### [Preparation Example 1]

LiPF₆ was dissolved to a concentration of 1 M in a mixed solvent of ethylene carbonate (EC) and ethyl methyl carbonate (EMC) (EC:EMC=25:75 v/v%) to prepare a base electrolyte.

### [Preparation Example 2]

An electrolyte was prepared by adding 1.0 wt% of vinylene carbonate (VC) to the base electrolyte of Preparation Example 1.

### [Preparation Example 3]

An electrolyte was prepared by adding 0.01 wt% of the electrolyte additive of Chemical Formula 2 of the present invention to the electrolyte of Preparation Example 2.

### [Preparation Example 4]

An electrolyte was prepared by adding 0.05 wt% of the electrolyte additive of Chemical Formula 2 of the present invention to the electrolyte of Preparation Example 2.

### [Preparation Example 5]

An electrolyte was prepared by adding 0.1 wt% of the electrolyte additive of Chemical Formula 2 of the present invention to the electrolyte of Preparation Example 2.

### [Preparation Example 6]

An electrolyte was prepared by adding 0.2 wt% of the electrolyte additive of Chemical Formula 2 of the present invention to the electrolyte of Preparation Example 2.

### [Preparation Example 7]

An electrolyte was prepared by adding 0.3 wt% of the electrolyte additive of Chemical Formula 2 of the present invention to the electrolyte of Preparation Example 2.

### [Preparation Example 8]

An electrolyte was prepared by adding 0.5 wt% of the electrolyte additive of Chemical Formula 2 of the present invention to the electrolyte of Preparation Example 2.

### [Preparation Example 9]

An electrolyte was prepared by adding 1.0 wt% of the electrolyte additive of Chemical Formula 2 of the present invention to the electrolyte of Preparation Example 2.

### [Preparation Example 10]

An electrolyte was prepared by adding 2.0 wt% of the electrolyte additive of Chemical Formula 2 of the present invention to the electrolyte of Preparation Example 2.

### [Preparation Example 11]

An electrolyte was prepared by adding 5.0 wt% of the electrolyte additive of Chemical Formula 2 of the present invention to the electrolyte of Preparation Example 2.

### [Preparation Example 12]

An electrolyte was prepared by adding 1.0 wt% of the electrolyte additive of Chemical Formula 2 of the present invention, 1.0 wt% of PS, and 0.5 wt% of ESA to the electrolyte of Preparation Example 2.

### [Preparation Example 13]

An electrolyte was prepared by adding 1.0 wt% of the electrolyte additive of Chemical Formula 2 of the present invention, 1.0 wt% of PS, 0.5 wt% of ESA, and 500 ppm of TPPI to the electrolyte of Preparation Example 2.

### Preparation of Lithium Secondary Battery

96 wt% of an NCM-based positive electrode active material comprising Li[Ni_{0.9}Co_{0.05}Mn_{0.05}]O₂, 2 wt% of carbon black as a conductive material, and 2 wt% of polyvinylidene fluoride (PVdF) as a binder were added to an NMP (N-methyl-2-pyrrolidinone) solvent to prepare a positive electrode active material slurry. The positive electrode active material slurry was applied to and dried on an aluminum thin film as a current collector to prepare a positive electrode, and then the positive electrode was rolled with a roll press to prepare the positive electrode.

Graphite as a negative electrode active material, CMC and SBR as binders, and carbon black as a conductive material were added at 97.1 wt%, 1 wt%, 1 wt%, and 0.9 wt%, respectively, to a solvent H₂O to prepare a negative electrode active material slurry. The negative electrode mixture was applied to and dried on a copper thin film as a negative electrode current collector to prepare a negative electrode.

In addition, the positive electrode and the negative electrode prepared as described above were prepared, a PE separator was positioned therebetween, and the batteries were manufactured based on a reference capacity of 730 mAh, wherein the deviation in the initial capacity of each battery may show a difference of ±20 mAh. The electrolyte according to each Preparation Example was injected thereinto to manufacture an aluminum pouch-type (Al-Pouch type) lithium secondary battery.

### Property Evaluation

1. Capacity retention rate at 45°C: One cycle consisted of charging to 4.2 V at a 1C-rate at 45°C, followed by a rest time of 10 minutes, discharging to 2.7 V at a 1C-rate, and then a rest time of 10 minutes; this process was repeated 300 times to measure the capacity retention rate (%).
2. Capacity recovery rate after 4 weeks at 60°C: After charging at room temperature to 4.2 V at 0.33C CC-CV 0.05C for 3 hours, the battery was left at 60°C for 4 weeks and then discharged to 2.8 V at 0.33C, after which the usable capacity (%) relative to the initial capacity was measured.
3. Thickness increase rate after 4 weeks at 60°C: After charging at room temperature to 4.2 V at 0.33C CC-CV 0.05C for 3 hours, the thickness of the battery was defined as A, and the thickness of the battery left for 4 weeks at 60°C under atmospheric pressure in a thermostat was defined as B, and the thickness increase rate was calculated by the equation (B-A)/A * 100.
4. Resistance increase rate after 4 weeks at 60°C: After charging at room temperature to 4.2 V at 0.33C CC-CV 0.05C for 3 hours, the battery was discharged to SOC 50% at 0.33C, and the resistance value at the time of discharging for 30 seconds at a 2C-rate was defined as C; and after being left for 4 weeks at 60°C under atmospheric pressure in a thermostat, the battery was discharged to SOC 50% at 0.33C, and the resistance value at the time of discharging for 30 seconds at a 2C-rate was defined as D; and the resistance increase rate was calculated by the equation (C-D)/C * 100.

**[Table 1]**

| **No.** | **45°C** | **60°C, After 4 weeks** | | |
|---|---|---|---|---|
| | **Capacity Retention Rate @300 cycles** | **Capacity Recovery Rate** | **Thickness Increase Rate** | **Resistance Increase Rate** |
| Preparation Example 1 | 37% | 37% | 30% | 257% |
| Preparation Example 2 | 61% | 73% | 13% | 127% |
| Preparation Example 3 | 67% | 74% | 13% | 88% |
| Preparation Example 4 | 76% | 77% | 12% | 75% |
| Preparation Example 5 | 81% | 79% | 11% | 60% |
| Preparation Example 6 | 85% | 83% | 9% | 46% |
| Preparation Example 7 | 86% | 86% | 7% | 33% |
| Preparation Example 8 | 89% | 90% | 4% | 19% |
| Preparation Example 9 | 93% | 95% | 1% | 10% |
| Preparation Example 10 | 91% | 94% | 2% | 15% |
| Preparation Example 11 | 90% | 93% | 3% | 22% |
| Preparation Example 12 | 94% | 96% | 1% | 11% |
| Preparation Example 13 | 96% | 97% | 0% | 8% |

When the electrolyte additive of the above Chemical Formula 2 was added, as compared with the case where it was not added, the capacity retention rate after 300 cycles at 45°C increased, the capacity recovery rate after 4 weeks at 60°C also increased, and the thickness increase rate and the resistance increase rate were significantly reduced.

Although specific parts of the present invention have been described in detail above, it is apparent to a person having ordinary skill in the art that such specific description is merely a preferred embodiment, and the scope of the present invention is not limited thereto. Therefore, the substantial scope of the present invention shall be defined by the appended claims and equivalents thereof.

## Claims

1. An electrolyte additive for a lithium secondary battery, represented by the following Chemical Formula 1: 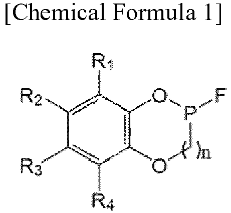 wherein, in Chemical Formula 1, R₁ to R₄ each independently represent hydrogen, deuterium, a C₁-C₆ alkyl group, or a C₃-C₆ cycloalkyl group, and n represents an integer of 0 to 2.

2. The electrolyte additive for a lithium secondary battery of claim 1, represented by the following Chemical Formula 2:

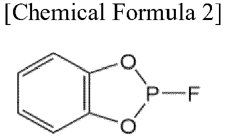

3. An electrolyte for a lithium secondary battery, comprising: an organic solvent; a lithium salt; and the electrolyte additive of claim 1.

4. The electrolyte for a lithium secondary battery of claim 3, wherein the additive is included in an amount of 0.005 to 10 wt% based on the weight of the electrolyte.

5. The electrolyte for a lithium secondary battery of claim 3, wherein the organic solvent comprises ethylene carbonate (EC), ethyl methyl carbonate (EMC), dimethyl carbonate (DMC), diethyl carbonate (DEC), or a combination thereof.

6. The electrolyte for a lithium secondary battery of claim 3, wherein the lithium salt comprises LiPF₆, LiFSI, LiDFOB, LiBF₄, LiAsF₆, LiCF₃SO₃, LiC(CF₃SO₂)₃, LiN(SO₂C₂F₅)₂, LiN(SO₂C₂F₃)₂, LiN(SO₂F₃)₂, LiSbF₆, LiPF₃(CF₂CF₃)₃, LiPF₃(CF₃)₃, or a combination thereof.

7. The electrolyte for a lithium secondary battery of claim 3, wherein the additive further comprises, as an additional additive, vinylene carbonate (VC), propanesultone (PS), ethylene sulfate (ESA), triphenyl phosphite (TPPI), or a combination thereof.

8. The electrolyte for a lithium secondary battery of claim 3, wherein the additive further comprises 0.5 to 3 wt% of vinylene carbonate (VC) based on the weight of the electrolyte.

9. The electrolyte for a lithium secondary battery of claim 3, wherein the additive further comprises 0.5 to 3 wt% of vinylene carbonate (VC), and 0.5 to 3 wt% of propanesultone (PS) and 0.1 to 1.5 wt% of ethylene sulfate (ESA), based on the weight of the electrolyte.

10. The electrolyte for a lithium secondary battery of claim 9, wherein the additive further comprises 100 to 10,000 ppm of triphenyl phosphite (TPPI) based on the weight of the electrolyte.

11. A lithium secondary battery, comprising: the electrolyte for a lithium secondary battery according to claim 3; a positive electrode; and a negative electrode.
